# EUROPEAN PATENT APPLICATION

(11) **EP 4 096 155 A1**
(43) Date of publication of application: **30.11.2022**
(21) Application number: 22173991.5
(22) Date of filing: 18.05.2022
(51) Int. Cl.: H04L 9/40, H04L 9/08

(54) **METHOD FOR PROXIMITY COMMUNICATION BETWEEN TERMINALS AND APPARATUS THEREOF**

(30) Priority: 28.05.2021 KR 20210069489
(71) Applicant: Samsung SDS Co., Ltd., Songpa-gu, Seoul (KR)
(72) Inventor: KIM, Dong Ho, Seoul (KR); LEE, Hong Chul, Seoul (KR); Lee, Hyo Il, Seoul (KR)
(74) Representative: Glawe, Delfs, Moll

(57) **Abstract**

A communication method according to an embodiment of the present disclosure includes establishing, by a second terminal, a connection with a first terminal through a first communication channel that uses a first protocol, receiving, by the second terminal, a first message including a public key of the first terminal from the first terminal through the first communication channel, storing, by the second terminal, the public key of the first terminal, transmitting, by the second terminal, a second message including a public key of the second terminal to the first terminal through the first communication channel, and generating a first secret key.

## Description

### CROSS-REFERENCE TO RELATED APPLICATION

This application claims the benefit under 35 USC §119 of Korean Patent Application No. 10-2021-0069489 filed on May 28, 2021, in the Korean Intellectual Property Office, the entire disclosure of which is incorporated herein by reference for all purposes.

### BACKGROUND

### 1. Field

The present disclosure relates to a method and apparatus for communication between terminals, and more particularly, to a communication method for mutually registering information on terminals in close proximity by applying ultra-wideband (UWB) technology or the like to the terminals and authenticating the terminals through short-range communication, and terminal apparatuses in which the communication method is implemented.

### 2. Description of the Related Art

Recently, ultra-wideband (UWB) communication technology has started to be used for accurate distance measurement and data transmission with enhanced security. UWB communication technology is attracting much attention as a technology for performing general data exchange between terminals, precisely measuring a relative position or distance between terminals indoors or outdoors, and enabling access control to buildings or vehicles or payment in stores or public transportation without close contact between terminals.

The Fine Ranging (FiRa) Consortium is a group of related companies assembled for the purpose of defining standardized UWB communication technology, and the FiRa Consortium is defining technical specifications for convenient methods and security for using UWB technology.

However, only the basic communication protocol is defined in the UWB communication specification of the FiRa Consortium, and details necessary to implement various applications using UWB communication are not actually provided.

For example, the UWB communication specification of the FiRa Consortium only defines a process related to mutual identification and authentication through communication channel establishment and data exchange between terminals, and does not define a procedure for mutually pre-registering terminals for this purpose.

Also, the UWB communication specification of the FiRa Consortium only defines an authentication procedure through terminal identifiers or the like exchanged when terminal hardware components are physically approaching, and does not define a process for enhancing security by requiring additional security authentication from a user through the corresponding terminal or an external device. Therefore, when a user loses a terminal pre-registered to be used for access or payment, there is a risk of losing security.

Meanwhile, the UWB communication specification of the FiRa Consortium handles only the case of using a symmetric key as an encryption/decryption key value for protecting a sub-session created between applications of two terminals communicating with each other. In the case of using a symmetric key, a terminal that generates a key value for sub-session protection has to unilaterally provide the key value to other terminals, and thus the security is relatively low compared to a scheme that uses a public key infrastructure (PKI)-based key.

### SUMMARY

A technical aspect to be achieved through an embodiment of the present disclosure is to provide detailed communication procedures necessary for implementing various applications based on communication between terminals through an ultra-wideband (UWB) technology and the like.

A technical aspect to be achieved through another embodiment of the present disclosure is to provide a method of registering authentication information of terminals between the terminals using a UWB technology and the like and a terminal device in which the method is implemented.

A technical aspect to be achieved through another embodiment of the present disclosure is to provide a UWB authentication method that does not lose security even if a terminal is lost and a terminal device in which the method is implemented.

A technical aspect to be achieved through another embodiment of the present disclosure is to provide a UWB authentication method that may require additional security authentication from a user through a terminal or an external device and a terminal device in which the method is implemented.

A technical aspect to be achieved through another embodiment of the present disclosure is to provide a UWB authentication method that may require additional security authentication from a user through a terminal or an external device and a terminal device in which the method is implemented.

A technical aspect to be achieved through another embodiment of the present disclosure is to provide a safe method of determining an encryption/decryption key value for protecting a sub-session generated between applications of terminals and a terminal device in which the method is implemented.

The technical aspects of the present disclosure are not limited to those described above, and other aspects that are not described herein will be clearly understood by those skilled in the art from the following description.

According to an embodiment of the present disclosure, there is provided a method for communication. The method includes establishing, by a second terminal, a connection with a first terminal through a first communication channel that uses a first protocol, receiving, by the second terminal, a first message including a public key of the first terminal from the first terminal through the first communication channel, storing, by the second terminal, the public key of the first terminal, transmitting, by the second terminal, a second message including a public key of the second terminal to the first terminal through the first communication channel, and generating a first secret key, wherein the first secret key is configured to be generated by the second terminal when the public key of the first terminal and a private key of the second terminal are input into a key exchange function, the first secret key is configured to be generated by the first terminal when a private key of the first terminal and the public key of the second terminal are input into the key exchange function, and the first secret key is configured to be used for communication using a second protocol between the first terminal and the second terminal.

According to another embodiment of the present disclosure, there is provided a method for communication. The method includes establishing, by a second terminal, a connection with a first terminal through a first communication channel that uses a first protocol, receiving, by the second terminal through the first communication channel, a first message regarding a configuration of a second communication channel that uses a second protocol from the first terminal, acquiring, by the second terminal, a first secret key by inputting a public key of the first terminal and a private key of the second terminal into a key exchange function, wherein the public key of the first terminal is stored in the second terminal in advance, initiating, by the second terminal, ranging to establish the second communication channel, establishing, by the second terminal, a connection with the first terminal through the second communication channel; and receiving data protected using the first secret key through the second communication channel.

According to another embodiment of the present disclosure, there is provided a method for communication. The method includes establishing, by a first terminal, a connection with a second terminal through a first communication channel that uses a first protocol, transmitting, by the first terminal, a first message including a public key of the first terminal to the second terminal through the first communication channel, receiving, by the first terminal, a second message including a public key of the second terminal from the second terminal through the first communication channel, storing, by the first terminal, the public key of the second terminal, and generating a first secret key, wherein the first secret key is configured to be generated by the first terminal when the public key of the second terminal and a private key of the first terminal are input into a key exchange function, the first secret key is configured to be generated by the second terminal when a private key of the second terminal and the public key of the first terminal are input into the key exchange function, and the first secret key is configured to be used for communication using a second protocol between the first terminal and the second terminal.

According to another embodiment of the present disclosure, there is provided a method for communication. The method includes establishing, by a first terminal, a connection with a second terminal through a first communication channel that uses a first protocol, transmitting, by the first terminal through the first communication channel, a first message regarding a configuration of a second communication channel that uses a second protocol to the second terminal, acquiring, by the first terminal, a first secret key by inputting a private key of the first terminal and a public key of the second terminal into a key exchange function, wherein the public key of the second terminal is stored in the first terminal in advance, initiating, by the first terminal, ranging to establish the second communication channel, establishing, by the first terminal, a connection with the second terminal through the second communication channel, and transmitting data protected using the first secret key through the second communication channel.

### BRIEF DESCRIPTION OF THE DRAWINGS

The above and other aspects and features of the present disclosure will become more apparent by describing exemplary embodiments thereof in detail with reference to the attached drawings, in which:
FIG. 1 is a diagram illustrating an exemplary access control system in which a method and an apparatus according to an embodiment of the present disclosure are implemented;
FIG. 2 is a block diagram showing a configuration of apparatuses according to an embodiment of the present disclosure;
FIG. 3 is a diagram illustrating key pairs generated based on the elliptic-curve Diffie-Hellman algorithm, which may be referenced to understand some embodiments of the present disclosure;
FIG. 4 is a sequence diagram showing a registration procedure between terminals according to an embodiment of the present disclosure;
FIG. 5 is a sequence diagram showing operations processed by a Fine-Ranging (FiRa) ultra-wideband (UWB) applet and an application executed in a second terminal in an embodiment described with reference to FIG. 4;
FIG. 6 is a sequence diagram showing an authentication procedure between terminals according to an embodiment of the present disclosure;
FIG. 7 is a sequence diagram showing operations processed by a FiRa UWB applet and an application executed in a second terminal in an embodiment described with reference to FIG. 6;
FIG. 8 is a sequence diagram illustrating a registration procedure between terminals according to a first embodiment of the present disclosure in which an additional security authentication procedure is performed in a terminal;
FIGS. 9 and 10 are sequence diagrams illustrating an authentication procedure between terminals according to the first embodiment of the present disclosure in which an additional security authentication procedure is performed in a terminal;
FIG. 11 is a sequence diagram illustrating a registration procedure between terminals according to a second embodiment of the present disclosure in which an additional security authentication procedure is performed in a terminal;
FIGS. 12 and 13 are sequence diagrams illustrating an authentication procedure between terminals according to the second embodiment of the present disclosure in which an additional security authentication procedure is performed in a terminal; and
FIG. 14 is a hardware configuration diagram of a terminal apparatus according to some embodiments of the present disclosure.

### DETAILED DESCRIPTION OF THE EMBODIMENTS

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, some embodiments will be described in detail with reference to the accompanying drawings.

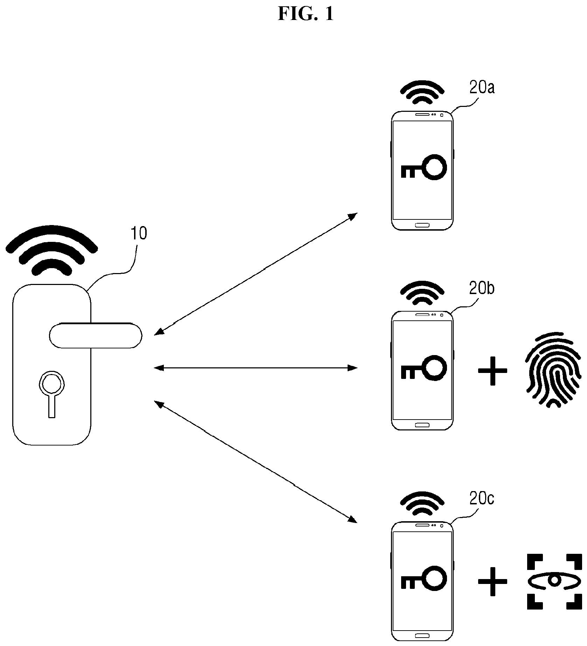

An exemplary access control system in which a method and an apparatus according to an embodiment of the present disclosure are implemented will be described with reference to FIG. 1.

The access control system according to this embodiment may include a target device (e.g., a digital door lock) 10 and a plurality of user devices (e.g., smartphones) 20a to 20c, as shown in FIG. 1. The access control system according to this embodiment may further include a remote server, which is not shown in FIG. 1.

The target device 10 shown in FIG. 1 may have a short-range communication module. The target device 10 may include one or more communication modules that support at least some of communication technologies such as near-field communication (NFC), Bluetooth, Bluetooth Low Energy (BLE), ultra-wideband (UWB), WiFi, etc.

The target device 10 may pre-register the plurality of user devices 20a to 20c by executing a registration process, measure distances from the user devices 20a to 20c, which are located in close physical proximity, through communication with the user devices 20a to 20c, identify the user devices 20a to 20c, and authenticate the user devices 20a to 20c using pre-registered information. In other words, the target device 10 may detect the pre-registered user devices 20a to 20c and provide a function of permitting access only to the registered devices.

Meanwhile, when the user devices 20a to 20c are registered with the target device 10, whether to acquire additional security authentication from a user of the corresponding device may be designated. As an example, the first user device 20a is designated to proceed with an authentication procedure with the target device 10 without additional user security authentication when the first user device 20a is physically approaching the target device 10. As another example, the second user device 20b and the third user device 20c may be designated so that the authentication procedure with the target device 10 can be completed only when additional security authentication is acquired through the user's fingerprint, face, iris, password, etc. before or after the second user device 20b and the third user device 20c physically approach the target device 10.

The user devices 20a to 20c shown in FIG. 1 may include a short-range communication module and a fast identity online (FIDO) security authentication module. Like the target device 10, the user devices 20a to 20c may include one or more communication modules that support communication technologies such as NFC, Bluetooth, BLE, UWB, and WiFi.

The user devices 20a to 20c may be registered with the target device 10 by executing a registration process. During the registration process, security information that allows the target device 10 to uniquely identify and authenticate the user devices 20a to 20c may be provided from the user devices 20a to 20c to the target device 10. Also, during the registration process, security information that allows the user devices 20a to 20c to uniquely identify and authenticate the target device 10 may be provided from the target device 10 to the user devices 20a to 20c.

When the user devices 20a to 20c physically approach the target device 10 and are located within a predetermined distance, the user devices 20a to 20c may initiate communication with the target device 10 according to a previously shared protocol and may exchange information for identifying and authenticating the user devices 20a to 20c with the target device 10. In the case that the second user device 20b is designated to undergo additional security authentication, e.g., fingerprint authentication, from the user of the second user device 20b when registered with the target device 10, the second user device 10b may proceed with the authentication process with the target device 10 only after the fingerprint authentication procedure for the user. The above restrictions may be implemented by individual applications running in the user devices 20a to 20c and may also be implemented by a communication module (e.g., a UWB communication module) driven in security areas of the user devices 20a to 20c.

Meanwhile, the user devices 20a to 20c may perform the communication and/or authentication procedures with other target devices not shown in FIG. 1 in addition to the target device 10, and one or more applications for performing the communication and/or authentication procedures with different target devices may be installed and run in the user devices 20a to 20c. For example, one or more applications such as a first application for authentication of access to a door controlled by a digital door lock, a second application for unlocking and driving a vehicle, and a third application for contactless payment when public transport is used may be installed and run in the user devices 20a to 20c.

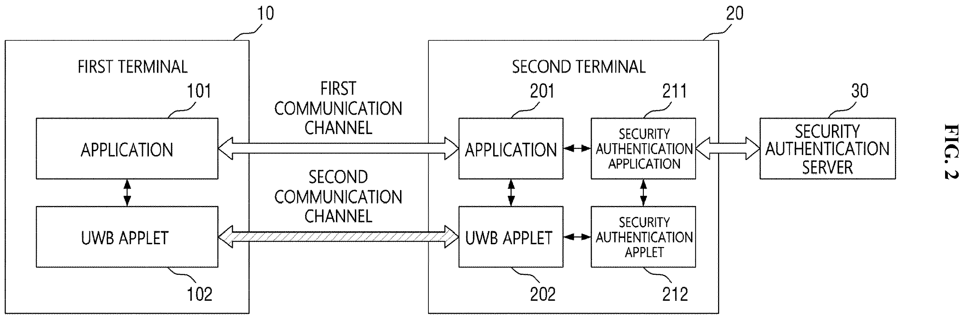

FIG. 2 is a block diagram showing a configuration of a first terminal 10 and a second terminal 20 according to an embodiment of the present disclosure. As shown in FIG. 2, the first terminal 10 may be the target device 10 in the embodiment described with reference to FIG. 1, and the second terminal 20 may be one of the user devices 20a to 20c described with reference to FIG. 1.

Referring to FIG. 2, the first terminal 10 may include one or more applications 101 and a UWB applet 102. The second terminal 20 may include one or more applications 201, a UWB applet 202, a security authentication application 211, and a security authentication applet 212. However, only components related to the embodiment of the present disclosure are shown in FIG. 2. Accordingly, those skilled in the art can know that other general-purpose components, for example, a processor, a memory, an input/output interface, and the like, may be further included in addition to the components shown in FIG. 2. Also, the components of the first terminal 10 and the second terminal 20 illustrated in FIG. 2 represent functional elements that are functionally distinct from each other, and it should be noted that the plurality of components may be integrated with each other in an actual physical environment. Each component will be described in detail below.

First, an application 101 running in the first terminal 10 may be an application for implementing functions corresponding to various purposes for which the first terminal 10 is utilized, such as access authentication, unlocking, vehicle driving, and payment. The application 101 may be executed in a security area (secure element) of the first terminal 10 and may also be executed in a normal area other than the security area. The application 101 may establish a first communication channel with another terminal, for example, the second terminal 20, through an arbitrary communication module included in the first terminal 10 and exchange data through the first communication channel.

The UWB applet 102 running in the first terminal 10 may be a component for providing a UWB communication function to the application 101 of the first terminal 10. The UWB applet 102 may be executed in the security area (secure element) of the first terminal 10, but the present disclosure is not limited thereto. The UWB applet 102 may include a FiRa applet and a SUS applet. The UWB applet 102 may generate and manage the IDs of a session and a sub-session for UWB communication with a counterpart terminal, a key pair for the session and the sub-session, etc.

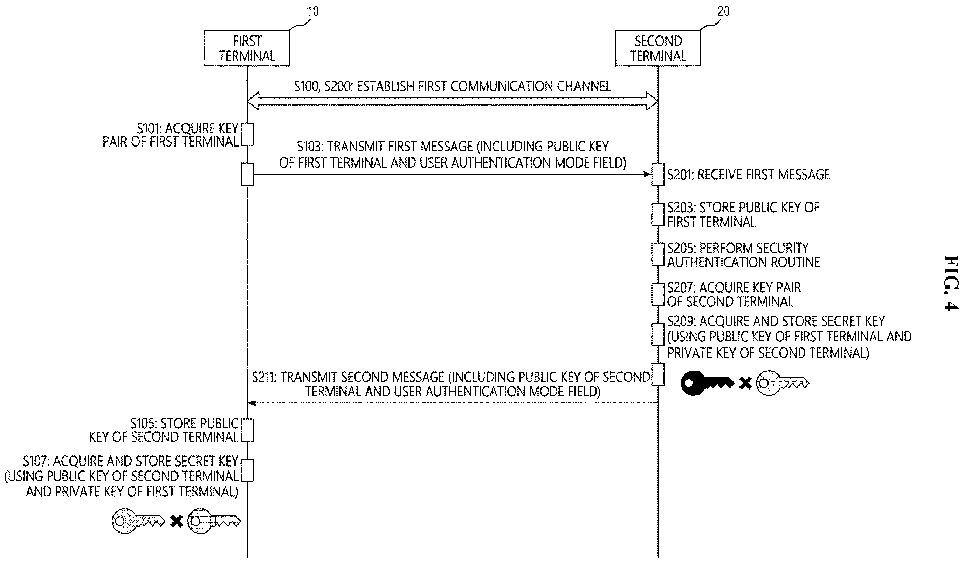

The functions and operations of the application 101 and the UWB applet 102 will be described in more detail with reference to FIGS. 4 to 13.

Next, the configuration of the second terminal 20 will be described. The application 201 running in the second terminal 20 may be an application for implementing functions corresponding to various purposes for which the second terminal 20 is utilized, such as access authentication, unlocking, vehicle driving, and payment. The application 201 may be executed in a security area of the second terminal 20 and may also be executed in a normal area rather than the security area. The application 201 may establish a first communication channel with another terminal, for example, the first terminal 10, through an arbitrary communication module included in the second terminal 20 and exchange data through the first communication channel.

The UWB applet 202 running in the first terminal 10 may be a component for providing a UWB communication function to the application 201 of the second terminal 20. The UWB applet 202 may be executed in the security area (secure element) of the second terminal 20, but the present disclosure is not limited thereto. For details regarding the UWB applet 202 of the second terminal 20, reference may be made to the description of the UWB applet 102 of the first terminal 10.

The second terminal 20 may further include a security authentication unit (211 and 212). The security authentication unit (211 and 212) may be implemented or installed in the second terminal 20 and may also be implemented in a hardware device distinct from the second terminal 20 and may be communicatively connected to the second terminal 20. In this specification, the security authentication unit (211 and 212) may be referred to as a security authentication apparatus.

In an embodiment, the security authentication unit (211 and 212) may include a security authentication application 211 executed in a normal area and a security authentication applet 212 executed in a security area (secure element).

The security authentication application 211 may communicate with the application 201 and the security authentication applet 212. In some embodiments, the security authentication application 211 may communicate with a security authentication server 30 outside the second terminal 20.

The security authentication applet 212 may communicate with the UWB applet 202 in the security area. Specifically, in an embodiment, the security authentication applet may exchange data with the UWB applet 202 through a sharable interface object provided in the security area.

The functions and operations of the application 201, the UWB applet 202, the security authentication application 211, and the security authentication applet 212 will be described in more detail with reference to FIGS. 4 to 13.

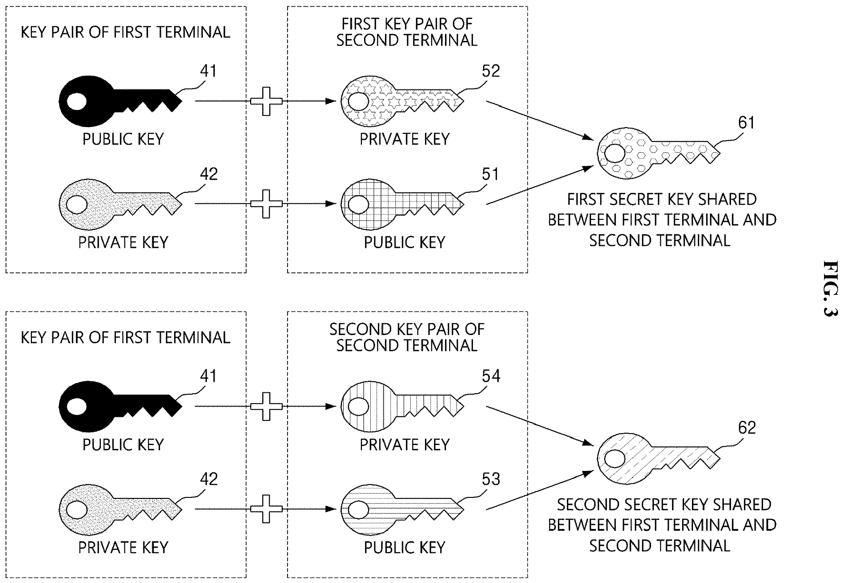

So far, the exemplary access control system and apparatus according to some embodiments of the present disclosure have been described with reference to FIGS. 1 and 2. A communication method between terminals according to some embodiments of the present disclosure will be described in more detail with reference to FIGS. 3 to 13.

First, FIG. 3 is a diagram illustrating key pairs generated based on the elliptic-curve Diffie-Hellman algorithm, which may be referenced to understand some embodiments of the present disclosure.

Referring to FIG. 3, the first terminal 10 may generate and retain a private-key-and-public-key key pair (41 and 42) of the first terminal, and the second terminal 20 may generate and retain a private-key-and-public-key key pair (51 and 52) of the second terminal.

The key pair (41 and 42) of the first terminal and the key pair (51 and 52) of the second terminal may be used to generate a first secret key 61 using the elliptic-curve Diffie-Hellman algorithm and the like. Specifically, the first secret key 61 may be derived when the public key 41 of the first terminal and the private key 52 of the second terminal are input into a key exchange function, and the same first secret key 61 may be derived when the private key 42 of the first terminal and the public key 51 of the second terminal are input into the key exchange function. That is, the second terminal may derive the first secret key 61 using the public key 41 of the first terminal together with its own private key 52 when the public key 41 of the first terminal is provided to the second terminal, and the first terminal may derive the same first secret key 61 using the public key 51 of the second terminal together with its own private key 42 when the public key 51 of the second terminal is provided to the first terminal.

For example, the first secret key 61 may be used as an encryption key for protecting data exchanged between the first terminal 10 and the second terminal 20 or a key for deriving the encryption key. For example, the first secret key 61 may be used to determine a session key of a communication session formed between the first terminal 10 and the second terminal 20.

The key pair (41 and 42) of the first terminal and the key pair (51 and 52) of the second terminal 20 may be generated and retained by the UWB applets 102 and 202 of the first terminal 10 and the second terminal 20. Specifically, the key pair (41 and 42), of the first terminal and the key pair (51 and 52) of the second terminal 20 may be generated and retained by the FiRa applets.

The first terminal 10 or the second terminal 20 may generate two or more key pairs and additionally use the generated key pairs to communicate with other terminals. For example, as shown in FIG. 3, the second terminal 20 may additionally generate and retain the second key pair (53 and 54).

The second key pair (53 and 54) of the second terminal may be used to generate a second secret key 62 using the elliptic-curve Diffie-Hellman algorithm and the like along with the key pair (41 and 42) of the first terminal. The second secret key 62 may be derived when the public key 41 of the first terminal and the second private key 54 of the second terminal are input into the key exchange function, and the same second secret key 62 may be derived when the private key 42 of the first terminal and the second public key 53 of the second terminal are input into the key exchange function. That is, the second terminal may derive the second secret key 62 using the public key 41 of the first terminal together with its own second private key 54 when the public key 41 of the first terminal is provided to the second terminal, and the first terminal may derive the same second secret key 62 using the second public key 53 of the second terminal together with its own private key 42 when the second public key 53 of the second terminal is provided to the first terminal. The second secret key 62 may be used to determine a sub-session key for encrypting and protecting a sub-session of the communication session formed between the first terminal 10 and the second terminal 20.

The second key pair (53 and 54) of the second terminal 20 may be a key pair that is generated and retained by a component other than the UWB applet (or the FiRa applet) of the second terminal 20. In an embodiment, the second key pair (53 and 54) of the second terminal 20 may be generated by the application 201 of the second terminal. In another embodiment, the second key pair (53 and 54) of the second terminal 20 may be generated by the security authentication unit (211 and 212) of the second terminal. Since the sub-session is encrypted using, as a sub-session key, the second secret key 62 derived using the second key pair (53 and 54) generated by a component other than the UWB applet (or the FiRa applet) of the second terminal 20, the UWB applet cannot read data of the sub-session, and thus it is possible to provide high security for data exchanged through the sub-session when terminals communicate with each other through multiple channels.

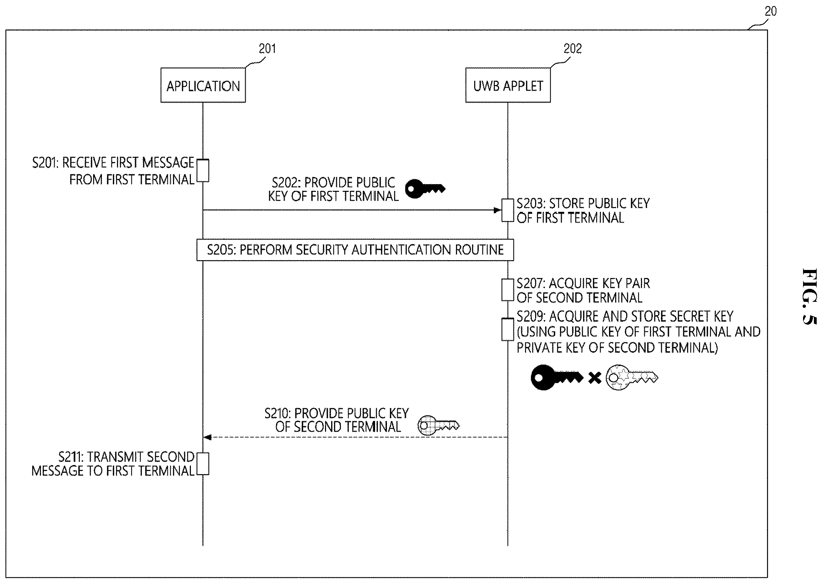

A registration procedure between terminals according to an embodiment of the present disclosure will be described below with reference to FIGS. 4 and 5. FIG. 4 is a diagram showing operations of the first terminal 10 and the second terminal 20 based on data sequentially exchanged between the first terminal 10 and the second terminal 20 according to the present embodiment, and FIG. 5 is a diagram showing in more detail the detailed operations of the application 201 and the UWB applet 202, which are components of the second terminal 20.

In FIGS. 4 to 13, the first terminal 10 may be understood as, for example, the target device 10 in the embodiments described with reference to FIGS. 1 and 2, and the second terminal 20 may be understood as, for example, one of the user devices 20a to 20c in the embodiments described with reference to FIGS. 1 and 2.

In order to perform a registration procedure between the first terminal 10 and the second terminal 20, first, a first communication channel may be established between the first terminal 10 and the second terminal 20 in operations S100 and S200. Thus, the applications 101 and 201 of the first terminal 10 and the second terminal 20 may exchange data through the first communication channel.

The first communication channel may be, for example, a communication channel according to a protocol such as BLE or NFC. The first communication channel may include various channels according to various communication protocols widely known to those skilled in the art in addition to BLE or NFC.

In operation S101, the application 101 of the first terminal 10 may request key information from the UWB applet 102. The UWB applet 102 of the first terminal 10 may acquire a key pair of the first terminal 10. Specifically, the UWB applet 102 of the first terminal 10 may acquire a public key 41 and a private key 42 which are generated and stored in advance. When the public key 41 and the private key 42 are not stored in the first terminal 10, the UWB applet 102 may generate a new key pair of the public key 41 and the private key 42.

The key pair of the first terminal 10 may be a key pair generated based on the elliptic-curve Diffie-Hellman algorithm described with reference to FIG. 3.

In operation S101, the UWB applet 102 may provide the public key 41 of the first terminal 10 to the application 101.

In operation S103, the application 101 of the first terminal 10 may transmit a first message to the second terminal 20 through the first communication channel. The identifier of the first terminal 10 and the public key 41 of the first terminal 10 may be included in the first message.

The first message may further include a field indicating a user authentication mode required by the second terminal 20. The user authentication mode may include, for example, a security mode and a non-security mode. When the user authentication mode in the second terminal 20 is the security mode, the authentication procedure with the first terminal 10 may be completed only when additional security authentication is acquired through the user's fingerprint, face, iris, password, etc. before or after the user of the second terminal 20 physically approaches the first terminal 10. On the other hand, when the user authentication mode in the second terminal 20 is the non-security mode, the authentication procedure with the first terminal 10 may be performed even without acquiring separate security authentication from the user when the second terminal 20 physically approaches the first terminal 10.

In the following description of operations S201 to S211, FIGS. 4 and 5 will also be referred to.

In operation S201, the second terminal 20 may receive the first message from the first terminal 10 through the first communication channel.

Referring to FIG. 5, in operation S202, the application 201 of the second terminal 20 provides the public key 41 of the first terminal to the UWB applet 202 of the second terminal 20. The public key 41 of the first terminal may be acquired from the first message.

In operation S203, the UWB applet 202 of the second terminal 20 may store the public key 41 of the first terminal.

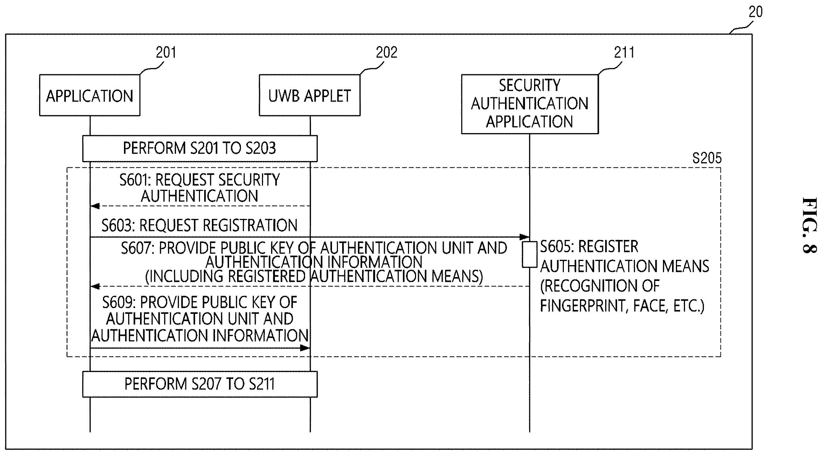

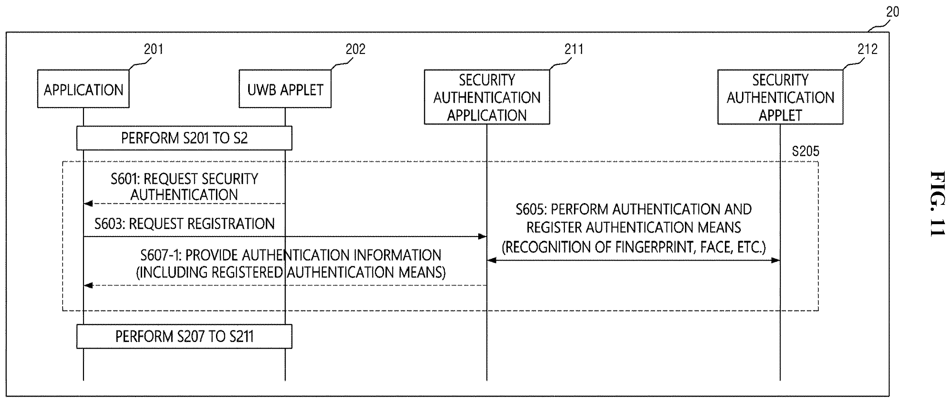

When the user authentication mode field included in the first message indicates the security mode, the application 201 and the UWB applet 202 of the second terminal 20 may perform a security authentication routine in operation S205. The security authentication routine will be described below with reference to FIGS. 8 and 11.

In operation S207, a key pair of the second terminal may be acquired. Specifically, the UWB applet 202 of the second terminal 20 may acquire a public key 51 and a private key 52 which are generated and stored in advance. When the public key 51 and the private key 52 are not stored in the second terminal 20, the UWB applet 202 may generate a new key pair of the public key 51 and the private key 52.

The key pair of the second terminal 20 may be a key pair generated based on the elliptic-curve Diffie-Hellman algorithm described with reference to FIG. 3.

In operation S290, the UWB applet 202 may acquire a first secret key 61 that may be used as a session key of a session of a second communication channel between the first terminal 10 and the second terminal 20. The first secret key 61 may be acquired by the second terminal 20 inputting the private key 52 of the second terminal and the public key 41 of the first terminal acquired from the first terminal 10 through the first message into the key exchange function. In operation S209, the UWB applet 202 may store the first secret key 61.

In operation S210, the UWB applet 202 of the second terminal 20 may provide the public key 51 of the second terminal to the application 201.

In operation S211, the application 201 of the second terminal 20 may transmit a second message to the first terminal 10 through the first communication channel. The identifier of the second terminal 20, the public key 51 of the second terminal 20, a field containing information regarding a setting result of the user authentication mode required by the second terminal 20, etc. may be included in the second message.

In operation S105, the application 101 of the first terminal 10 may receive the second message from the second terminal 20 through the first communication channel. The application 101 of the first terminal 10 may provide the public key 51 of the second terminal 20 included in the second message to the UWB applet 102. The UWB applet 102 of the first terminal 10 may store the public key 51 of the second terminal 20. Also, the UWB applet 102 of the first terminal 10 may store information on a user authentication mode required by the second terminal 20.

In operation S107, the UWB applet 102 of the first terminal 10 may acquire the first secret key 61 that may be used as the session key of the session of the second communication channel between the first terminal 10 and the second terminal 20. The first secret key 61 may be acquired by the first terminal 10 inputting the private key 42 of the first terminal and the public key 51 of the second terminal acquired from the second terminal 20 through the second message into the key exchange function. In operation S107, the UWB applet 102 may store the first secret key 61.

Through the embodiment that has been described with reference to FIGS. 4 and 5, identification information or registration information required in advance to exchange data (for mutual authentication, payment, etc.) may be exchanged through the second communication channel between the first terminal 10 and the second terminal 20, for example, short-range communication based on UWB communication technology. In particular, in order to safely share a session key (e.g., the first secret key) for protecting data of the session through the second communication channel between the first terminal 10 and the second terminal 20, each terminal may provide the public key of the key pair generated based on the elliptic-curve Diffie-Hellman algorithm or the like to the other. Each terminal may derive and use the same session key (the first secret key) by combining its own private key and the public key of the other acquired through this process. Therefore, it is possible to exchange data safely compared to a scheme of providing a symmetric key generated by one terminal to the other.

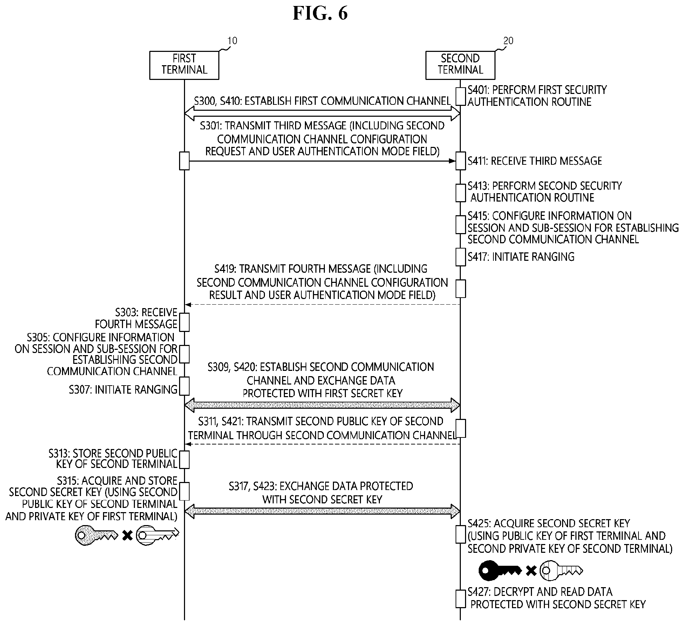

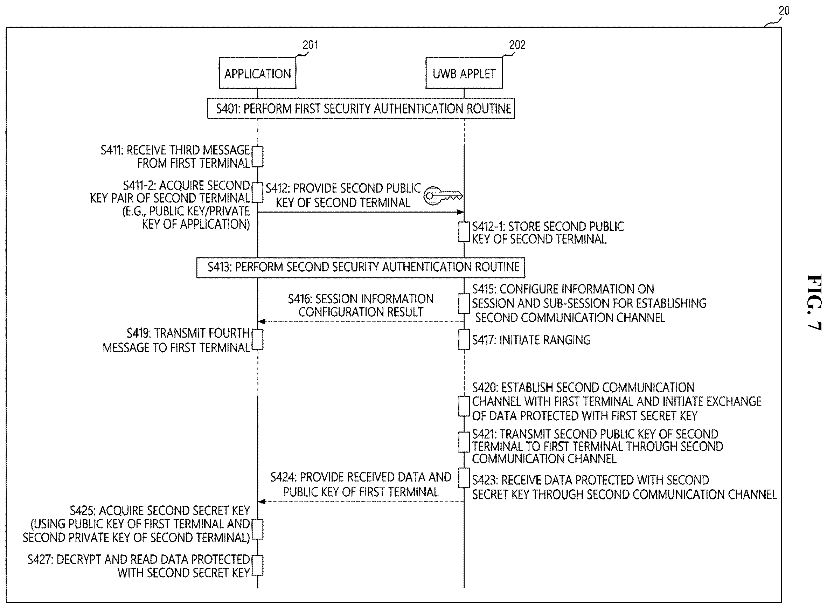

An authentication procedure between terminals according to an embodiment of the present disclosure will be described below with reference to FIGS. 6 and 7. FIG. 6 is a diagram showing operations of the first terminal 10 and the second terminal 20 based on data sequentially exchanged between the first terminal 10 and the second terminal 20 according to the present embodiment, and FIG. 7 is a diagram showing in more detail the detailed operations of the application 201 and the UWB applet 202, which are components of the second terminal 20.

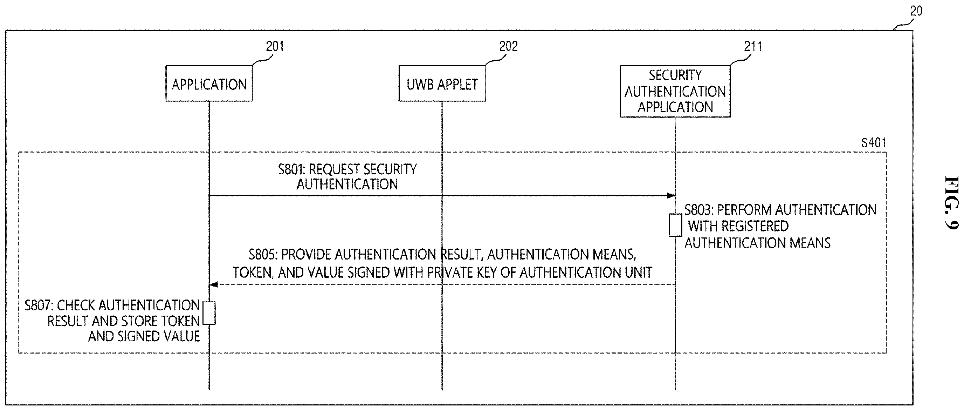

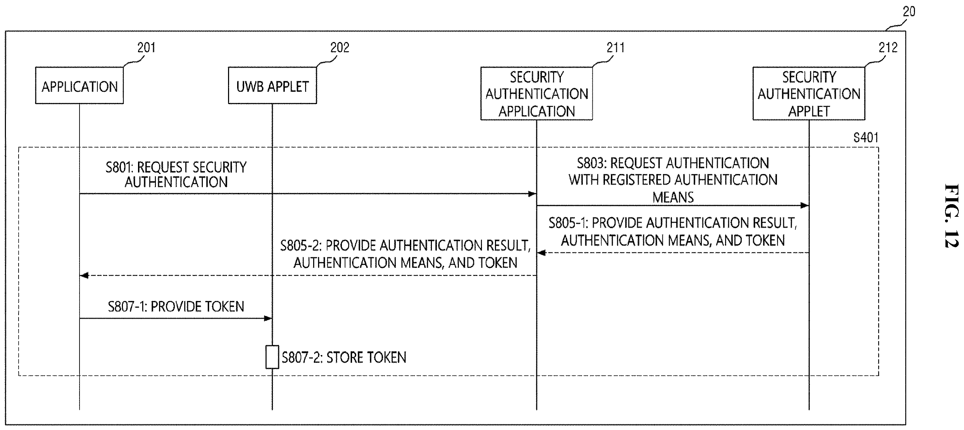

First, when the user authentication mode required by the second terminal 20 is the security mode, a first security authentication routine may be performed in the second terminal 20 in operation S401. The first security authentication routine will be described below with reference to FIGS. 9 and 12.

Subsequently, in operations S300 and S410, the first communication channel may be established between the first terminal 10 and the second terminal 20 in order to perform the authentication procedure between the first terminal 10 and the second terminal 20. Thus, the applications 101 and 201 of the first terminal 10 and the second terminal 20 may exchange data through the first communication channel.

The first communication channel may be, for example, a communication channel according to a protocol such as BLE or NFC. The first communication channel may include various channels according to various communication protocols widely known to those skilled in the art in addition to BLE or NFC.

In operation S301, the application 101 of the first terminal 10 may acquire, from the UWB applet 202, information on the user authentication mode required from the second terminal 20.

Also, in operation S301, the application 101 of the first terminal 10 may transmit a third message to the second terminal 20 through the first communication channel. The third message may include a message requesting to initiate the establishment of the second communication channel. The third message may further include a field indicating a user authentication mode required from the second terminal 20.

In the following description of operations S411 to S417, FIGS. 6 and 7 will also be referred to.

In operation S411, the second terminal 20 may receive the third message from the first terminal 10 through the first communication channel.

Referring to FIG. 6, in operation S411-2, the second key pair of the second terminal 20, that is, the second public key 53 and the second private key 54, may be acquired. In an embodiment, the second key pair of the second terminal may include the public key 53 and the private key 54 which are generated by the application 201.

In operation S412, the application 201 of the second terminal 20 may provide the second public key 53 of the second terminal 20 to the UWB applet 202 of the second terminal.

In operation S412-2, the UWB applet 202 of the second terminal 20 may store the second public key of the second terminal.

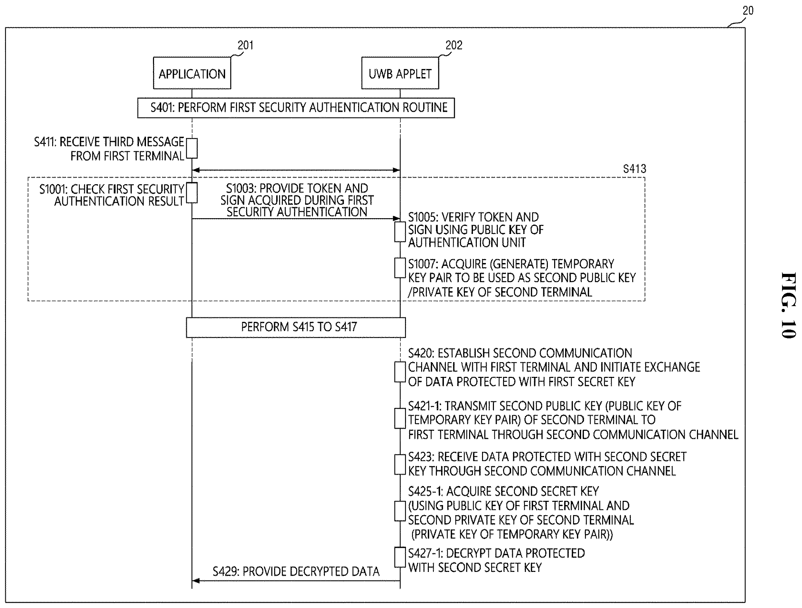

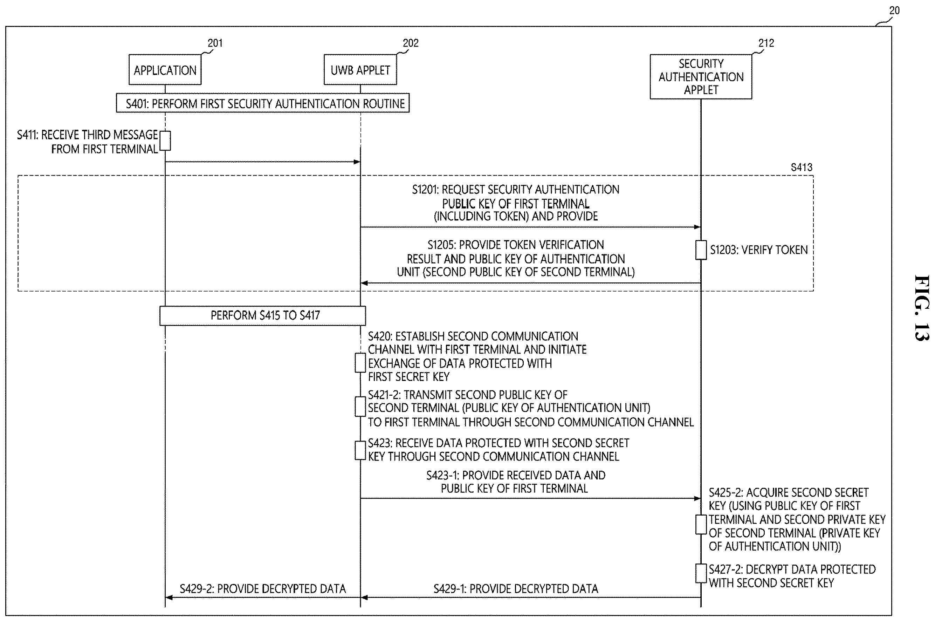

On the other hand, when the user authentication mode field included in the third message indicates the security mode, the application 201 and the UWB applet 202 of the second terminal 20 may perform a second security authentication routine in operation S413. The second security authentication routine will be described below with reference to FIGS. 10 and 13.

In operation S415, session information for establishing the second communication channel with the first terminal 10 may be set by the UWB applet 202 of the second terminal 20.

In an embodiment, the UWB applet 202 may acquire the first secret key 61 to be used as a session key by inputting the public key 41 of the first terminal 10 acquired during the registration process between the first terminal 10 and the second terminal 20 into the key exchange function in addition to the private key 52 of the second terminal 20.

In another embodiment, the UWB applet 202 may acquire and store the first secret key 61 during the registration process between the first terminal 10 and the second terminal 20 and may restore the pre-stored first secret key 61 in operation S415.

Also, in operation S415, information for setting the sub-session between the application 101 of the first terminal 10 and the second application 201 of the second terminal 20 may be stored in the UWB applet 202 of the second terminal 20. Specifically, the second public key 53 of the second terminal 20 provided by the second application 201 may be set as a sub-session key for the UWB applet 202.

In operation S416, a result of setting the session and sub-session information may be provided from the UWB applet 202 to the application 201.

Subsequently, in operation S417, the ranging of the second terminal 20 may be initiated to establish the second communication channel with the first terminal 10.

In operation S419, the application 201 of the second terminal 20 may transmit a fourth message to the first terminal 10 through the first communication channel. The fourth message may include a field indicating the user authentication mode of the second terminal and the setting result for the session information.

In operation S303, the application 101 of the first terminal 10 may receive the fourth message.

In operation S305, the UWB applet 102 of the first terminal 10 may set the session and sub-session information for establishing the second communication channel.

In an embodiment, the UWB applet 102 may acquire the first secret key 61 to be used as a session key by inputting the public key 51 of the second terminal 20 acquired during the registration process between the first terminal 10 and the second terminal 20 into the key exchange function in addition to the private key 42 of the first terminal 10.

In another embodiment, the UWB applet 202 may acquire and store the first secret key 61 during the registration process between the first terminal 10 and the second terminal 20 and may restore the pre-stored first secret key 61 in operation S305.

Subsequently, in operation S307, the ranging of the first terminal 10 may be initiated to establish the second communication channel with the first terminal 10.

In operations S309 and S320, the second communication channel between the first terminal 10 and the second terminal 20, for example, a short-range communication channel based on UWB communication technology, may be established. Specifically, in operations S309 and S420, the second communication channel may be established between the UWB applets 102 and 202 of the first terminal 10 and the second terminal 20.

The second communication channel may be protected by the first secret key 61. The first terminal 10 may acquire the first secret key 61 and use the first secret key 61 as the session key of the second communication channel in operation S305, and the second terminal 20 may acquire the first secret key 61 and use the first secret key 61 as the session key of the second communication channel in operation S415.

In the following description of operations S420 to S427, FIGS. 6 and 7 will also be referred to.

In operations S421 and S311, the UWB applet 202 of the second terminal 20 may transmit the second public key 53 of the second terminal to the first terminal 10 through the second communication channel. The second public key 53 may be used as a key of the sub-session to be formed between the applications 101 and 201 of the first terminal 10 and the second terminal 20.

In operation S313, the UWB applet 102 of the first terminal 10 may store the second public key 53 of the second terminal 20.

In operation S315, the UWB applet 102 of the first terminal 10 may acquire the second secret key 62 that may be used as the session key of the sub-session of the second communication channel between the first terminal 10 and the second terminal 20. The second secret key 62 may be acquired by the first terminal 10 inputting the private key 42 of the first terminal and the second public key 53 of the second terminal acquired from the second terminal 20 into the key exchange function. In operation S315, the UWB applet 102 may store the second secret key 62.

In operations S317 and S423, the UWB applet 102 of the first terminal 10 may transmit data protected by additionally using the second secret key 62 to the UWB applet 202 of the second terminal 20, and the UWB applet 202 of the second terminal 20 may receive the protected data.

In operation S424, the UWB applet 202 of the second terminal 20 may provide, to the application 201, the public key 41 of the first terminal and the data received from the first terminal 10 in operation S423.

In operation S425, the application 201 of the second terminal 20 may acquire the second secret key 62. The second secret key 62 may be a key used as the session key of the sub-session of the second communication channel between the first terminal 10 and the second terminal 20. The second secret key 62 may be acquired by the second terminal 20 inputting the second private key 54 of the second terminal and the public key 41 of the first terminal acquired from the first terminal 10 into the key exchange function. The second private key 54 of the second terminal may be the private key of the public-key-and-private-key key pair (53 and 54) that is generated or retained by the application 201.

In operation S427, the application 201 of the second terminal 20 may decrypt the data received from the first terminal 10 in operation S423 with the second secret key 62 acquired in operation S425 and may decrypt and read the data.

The embodiment that has been described with reference to FIGS. 6 and 7 may provide a method of safely generating a session and a sub-session for the first terminal 10 and the second terminal 20 to authenticate each other through the second communication channel therebetween, for example, through the short-range communication based on UWB communication technology.

In particular, the second communication channel protected using, as the session key, the first secret key 61 derived using the public key exchanged during the registration process between the first terminal 10 and the second terminal 20 may be formed between the first terminal 10 and the second terminal 20.

Furthermore, the second secret key 62 may be acquired by additionally using the public-key-and-private-key key pair generated or retained by the application of the second terminal 20, and the sub-session formed between the applications 101 and 201 of the first terminal 10 and the second terminal 20 may be safely protected by using the second secret key 62 as the sub-session key.

A registration procedure and an authentication procedure between terminals according to a first embodiment of the present disclosure in which an additional security authentication procedure is performed in the second terminal 20 will be described below with reference to FIGS. 8 to 10.

In this embodiment which will be described with reference to FIGS. 8 to 10, additional security authentication required from the user of the second terminal 20 may be processed in the normal area of the second terminal 20, that is, outside the security area (Secure Element). In this embodiment, the second terminal 20 may include the application 201 and the security authentication application 211 which are executed in the normal area and the UWB applet 202 which is executed in the security area. Also, the security authentication application 211 may exchange authentication-related data with the security authentication server 30 outside the second terminal 20.

FIG. 8 may be understood as a drawing that shows in more detail operations performed by the second terminal 20 in operation S205 during the registration procedure of the first terminal 10 and the second terminal 20 which has been described with reference to FIGS. 4 and 5. Accordingly, detailed descriptions of the operations already described with reference to FIGS. 4 and 5 will not be repeated, but detailed operations of operation S205 will be described.

First, referring to FIGS. 4 and 5, the second terminal 20 may establish the first communication channel with the first terminal 10 (S200) and receive the first message including the user authentication mode field and the public key 41 of the first terminal 10 from the first terminal 10 (S201), and the UWB applet 202 of the second terminal 20 may store the public key 41 of the first terminal 10 (S203).

When the user authentication mode field included in the first message indicates the security mode, the application 201 and the UWB applet 202 of the second terminal 20 may perform the security authentication routine in operation S205.

Referring now to FIG. 8, in operation S601, the UWB applet 202 may request security authentication from the application 201.

In operation S603, the application 201 may provide, to the security authentication application 211, information related to the registration of the second terminal 20 with the first terminal 10.

In operation S605, the security authentication application 211 may perform registration. When an authentication means for registration has not already been determined, the security authentication application 211 may acquire information for security authentication, such as fingerprint information, facial (face) shape information, iris information, and a password, from the user and register the acquired information. Also, the above information may be transmitted to the security authentication server 30 and verified by the server 30, and the verification result may be provided from the server 30 to the security authentication application 211.

In operation S607, the security authentication information registration result may be provided from the security authentication application 211 to the application 201. The security authentication information registration result may include information on the authentication means (fingerprint, face, iris, password, etc.) and the public key of the security authentication application 211.

In operation S609, the application 201 may provide, to the UWB applet 202, the security authentication information registration result and the public key received from the security authentication application 211. The UWB applet 202 may store the public key of the security authentication application and it may be used in the authentication procedure of the first terminal 10 and the second terminal 20 in the future.

By performing the above-described operations S601 to S609, the security authentication routine performing operation S205 shown in FIG. 5 may be completed.

Subsequently, in the authentication procedure of the first terminal 10 and the second terminal 20 described with reference to FIGS. 6 and 7, the operations in which the second terminal 20 performs the first security authentication routine S401 and the second security authentication routine S413 will be described with reference to FIGS. 9 and 10. Specifically, FIG. 9 is a diagram illustrating the first security authentication routine S401 in more detail, and FIG. 10 is a diagram illustrating the second security authentication routine S413 in more detail.

First, the first security authentication routine S401 will be described with reference to FIG. 9. The first security authentication routine S401 may be performed after the first terminal 10 and the second terminal 20 physically approach each other so that the first communication channel is established. Alternatively, the first security authentication routine S401 may be performed in advance by the user of the second terminal 20 before the first terminal 10 and the second terminal 20 physically approach each other. When the first security authentication routine S401 is performed in advance before the first terminal 10 and the second terminal 20 physically approach each other, advantageously, the authentication procedure of the first terminal 10 and the second terminal 20 can be quickly performed even without the intervention of the user of the second terminal 20 after the first terminal 10 and the second terminal 20 physically approach each other.

In operation S801, in response to user security authentication being required by the first terminal 10 or the user of the second terminal 20, the application 201 of the second terminal 20 requests security authentication from the security authentication application 211 of the second terminal.

In operation S803, the security authentication application 211 may require authentication from the user of the second terminal 20 through the authentication means (fingerprint, face, iris, password, etc.) pre-registered in operation S605 for the registration procedure.

When the user security authentication is successfully completed in operation S803, the security authentication application 211 provides, to the application 201, the authentication result and information on the authentication means (fingerprint, face, iris, password, etc.) used for the authentication in operation S805. The authentication result may include a token value including whether the authentication has succeeded or failed, identification information on the authenticated user, information on the valid time or expiration date of the user authentication, the number of times the user authentication is valid, and the like. Also, the authentication result may include a value signed by the security authentication application 211 using its own private key.

In operation S807, the application 201 may check the authentication result and store the token and the signed value. The stored information may be used while the second security authentication routine S413 which will be described below is being performed.

The second security authentication routine S413 will be described below with reference to FIG. 10. The second security authentication routine S413 may be performed after the first terminal 10 and the second terminal 20 physically approach each other so that the first communication channel is established. When the first security authentication routine S401 is performed in advance before the first terminal 10 and the second terminal 20 physically approach each other, the authentication procedure of the first terminal 10 and the second terminal 20 can be performed even without the intervention of the user of the second terminal 20 during the second security authentication routine S413.

FIG. 10 may be understood as a drawing that shows in more detail operations performed by the second terminal 20 in operation S413 during the authentication procedure of the first terminal 10 and the second terminal 20 which has been described with reference to FIGS. 6 and 7. Accordingly, detailed descriptions of the operations already described with reference to FIGS. 6 and 7 will not be repeated, but detailed operations of operation S413 will be described.

Referring to FIG. 10 together with FIG. 6, the first security authentication routine S401 may be performed in the second terminal 20 in operation S401, and the first communication channel may be established between the first terminal 10 and the second terminal 20 in operation S410. In operation S411, the application 201 of the second terminal 20 may receive the third message (including fields such as a second communication channel setup initiation request, a user authentication mode, etc.) from the first terminal 10, and the received third message may be provided to the UWB applet 202 of the second terminal 20.

In operation S1001, the application 201 may check the user security authentication result that is acquired and stored in advance as a result of performing the first security authentication routine S401. As described above, the user security authentication result may include a token value including whether the authentication has succeeded or failed, identification information on the authenticated user, information on the valid time or expiration date of the user authentication, the number of times the user authentication is valid, and the like.

When the result of performing the first security authentication routine S401 indicates that the user security authentication has succeeded and indicates that the user authentication has not expired (i.e., the user authentication is currently valid), the application 201 may proceed with operation S1003 and subsequent operations.

When the result of performing the first security authentication routine S401 indicates that the user security authentication has failed or indicates that the user authentication is currently expired, the application 201 may perform operation S1001 again after re-performing the first security authentication routine S401.

In operation S1003, the application 201 may provide, to the UWB applet 202, the token and signed value acquired from the security authentication application 211 while the first security authentication routine S401 is being performed.

The UWB applet 202 may verify the token and the signed value with the public key of the security authentication application 211 in operation S1005. In the operation S609 of the security authentication routine S205 in the registration procedure of the first terminal 10 and the second terminal 20, the public key of the security authentication application 211 may be received from the application 201 of the UWB applet 202 and then stored.

In operation S1005, the UWB applet 202 may verify the authenticity of the token and the signed value provided from the application 201 through operation S1003 by the security authentication application 211 verifying the value signed with its own private key using the public key of the security authentication application 211.

Subsequently, in operation S1007, the UWB applet 202 may generate a temporary key pair (a temporary public key and a temporary private key) to be used in a sub-session which will be established through the second communication channel with the first terminal 10.

The temporary key pair may be understood as replacing the second key pair (the second public key 53 and the second private key 54) of the second terminal 20 which has been described in relation to the operation S411-2 of FIG. 6. That is, the temporary key pair may be used to generate the second secret key 62 using the elliptic-curve Diffie-Hellman algorithm and the like along with the key pair (41 and 42) of the first terminal. The second secret key 62 may be derived when the public key 41 of the first terminal and the temporary private key of the second terminal are input into the key exchange function, and the same second secret key 62 may be derived when the private key 42 of the first terminal and the temporary public key of the second terminal are input into the key exchange function. That is, the second terminal may derive the second secret key 62 using the public key 41 of the first terminal together with its own temporary private key when the public key 41 of the first terminal is provided to the second terminal, and the first terminal may derive the same second secret key 62 using the temporary public key of the second terminal together with its own private key 42 when the temporary public key of the second terminal is provided to the first terminal. The second secret key 62 may be used to determine a sub-session key for encrypting and protecting a sub-session of the communication session formed between the first terminal 10 and the second terminal 20.

After operation S1007 is performed, the second terminal 20 may perform operations S415 to S417 that have been described above with reference to FIG. 7. Operations after the second communication channel is established between the first terminal 10 and the second terminal 20 will be described below.

In operation S420, the second communication channel may be established between the first terminal 10 and the second terminal 20, and data protected with the first secret key may be received by the UWB applet 202 from the first terminal 10.

In operation S421-1, the UWB applet 202 may transmit the second public key of the second terminal to the first terminal 10 through the second communication channel. Here, the second public key of the second terminal may be the public key of the temporary key pair generated in operation S 1007.

In operation S423, the UWB applet 202 may receive data protected with the second secret key from the first terminal 10 through the second communication channel.

In operation S425-1, the UWB applet 202 may acquire the second secret key. The second secret key 62 may be a key used as the session key of the sub-session of the second communication channel between the first terminal 10 and the second terminal 20. The second secret key 62 may be acquired by the second terminal 20 inputting the private key of the temporary key pair of the second terminal and the public key 41 of the first terminal acquired from the first terminal 10 into the key exchange function.

In operation S427-1, the UWB applet 202 may decrypt the data received from the first terminal 10 in operation S423 with the second secret key.

In operation S429, the UWB applet 202 may provide the decrypted data to the application 201, and the application 201 may read the decrypted data.

Through this embodiment that has been described with reference to FIGS. 8 to 10, it is possible to further enhance security by requiring additional security authentication (fingerprint, face, iris, password, etc.) from the user of the second terminal 20 in the registration and authentication process for the second communication channel between the first terminal 10 and the second terminal 20, for example, the short-range communication based on UWB communication technology. Thus, it is possible to safely process registration, authentication, and data exchange between the first terminal 10 and the second terminal 20.

Also, in this embodiment, by enabling the first terminal 10 and the second terminal 20 to perform a procedure of acquiring additional security authentication from the user before the first terminal 10 and the second terminal 20 physically approach each other, the authentication procedure of the first terminal 10 and the second terminal 20 may be quickly performed even without the intervention of the user of the second terminal 20 after the first terminal 10 and the second terminal 20 physically approach each other.

A registration procedure and an authentication procedure between terminals according to a second embodiment of the present disclosure in which an additional security authentication procedure is performed in the second terminal 20 will be described below with reference to FIGS. 11 to 13.

In this embodiment which will be described with reference to FIGS. 11 to 13, at least some operations of additional security authentication required from the user of the second terminal 20 may be processed in the security area (e.g., Secure Element) of the second terminal 20. At least in this respect, this embodiment is distinguishable from the embodiment described with reference to FIGS. 8 to 10.

Specifically, in this embodiment, the second terminal 20 may include the application 201 and the security authentication application 211 which are executed in the normal area and the UWB applet 202 and the security authentication applet 212 which are executed in the security area. In some embodiments, the UWB applet 202 and the security authentication applet 212 may exchange data with each other through a sharable interface object in the security area. Meanwhile, the security authentication application 211 may exchange authentication-related data with the security authentication server 30 outside the second terminal 20.

FIG. 11 may be understood as a drawing that shows in more detail operations performed by the second terminal 20 in operation S205 during the registration procedure of the first terminal 10 and the second terminal 20 which has been described with reference to FIGS. 4 and 5. Accordingly, detailed descriptions of the operations already described with reference to FIGS. 4 and 5 will not be repeated, but detailed operations of operation S205 will be described.

First, referring to FIGS. 4 and 5, the second terminal 20 may establish the first communication channel with the first terminal 10 (S200) and receive the first message including the user authentication mode field and the public key 41 of the first terminal 10 from the first terminal 10 (S201), and the UWB applet 202 of the second terminal 20 may store the public key 41 of the first terminal 10 (S203).

When the user authentication mode field included in the first message indicates the security mode, the application 201 and the UWB applet 202 of the second terminal 20 may perform the security authentication routine in operation S205.

Referring now to FIG. 11, in operation S601, the UWB applet 202 may request security authentication from the application 201.

In operation S603, the application 201 may provide, to the security authentication application 211, information related to the registration of the second terminal 20 with the first terminal 10.

In operation S605, the security authentication application 211 may request the security authentication applet 212 to process the registration. When an authentication means for registration has not already been determined, the security authentication applet 212 may acquire information for security authentication, such as fingerprint information, facial shape information, iris information, and a password, from the user and register the acquired information. Also, the above information may be transmitted to the security authentication server 30 and verified by the server 30, and the verification result may be provided from the server 30 to the security authentication application 211.

In operation S607-1, the security authentication information registration result may be provided from the security authentication application 211 to the application 201.

The security authentication information registration result may include information on the authentication means (fingerprint, face, iris, password, etc.), etc.

It should be noted that operation S607-1 of this embodiment is different from operation S607 of the embodiment described with reference to FIGS. 8 to 10 in that the public key of the security authentication application 211 may not be provided to the application 201.

Also, it should be noted that this embodiment is different from the embodiment described with reference to FIGS. 8 to 10 in that the public key of the security authentication application 211 may not be provided to the UWB applet 202.

In this embodiment, by performing the above-described operations S601 to S607-1, the security authentication routine performing operation S205 shown in FIG. 5 may be completed.

Subsequently, in the authentication procedure of the first terminal 10 and the second terminal 20 described with reference to FIGS. 6 and 7, the operations in which the second terminal 20 performs the first security authentication routine S401 and the second security authentication routine S413 will be described with reference to FIGS. 12 and 10. Specifically, FIG. 12 is a diagram illustrating the first security authentication routine S401 in more detail, and FIG. 13 is a diagram illustrating the second security authentication routine S413 in more detail.

Also, in this embodiment, by using the temporary key pair generated by the UWB applet 202 of the second terminal 20 in order to generate the second secret key for encrypting the sub-session and allowing the temporary key pair to be automatically discarded, for example, after a predetermined time has elapsed or after a predetermined number of authentications have been completed, it is possible to safely protect data transmitted or received between the applications of the first terminal 10 and the second terminal 20.

First, the first security authentication routine S401 will be described with reference to FIG. 12. The first security authentication routine S401 may be performed after the first terminal 10 and the second terminal 20 physically approach each other so that the first communication channel is established. Alternatively, the first security authentication routine S401 may be performed in advance by the user of the second terminal 20 before the first terminal 10 and the second terminal 20 physically approach each other. When the first security authentication routine S401 is performed in advance before the first terminal 10 and the second terminal 20 physically approach each other, advantageously, the authentication procedure of the first terminal 10 and the second terminal 20 can be quickly performed even without the intervention of the user of the second terminal 20 after the first terminal 10 and the second terminal 20 physically approach each other.

In operation S801, in response to user security authentication being required by the first terminal 10 or the user of the second terminal 20, the application 201 of the second terminal 20 requests security authentication from the security authentication application 211 of the second terminal.

In operation S803, the security authentication application 211 may request the security authentication applet 212 to process the user security authentication. The security authentication applet 212 may require authentication from the user of the second terminal 20 through the authentication means (fingerprint, face, iris, password, etc.) pre-registered in operation S605 for the registration procedure.

When the user security authentication is successfully completed in operation S803, the security authentication application 211 provides, to the application 201 through the security authentication application 211, the authentication result and information on the authentication means (fingerprint, face, iris, password, etc.) used for the authentication in operations S805-1 and S805-2. The authentication result may include a token value including whether the authentication has succeeded or failed, identification information on the authenticated user, information on the valid time or expiration date of the user authentication, the number of times the user authentication is valid, and the like. This embodiment is distinguishable from the embodiment that has been described with reference to FIGS. 8 to 10 in that the value signed with the private key of the security authentication application 211 or the security authentication applet 212 need not be provided to the application 201.

In operation S807-1, the application 201 may check the authentication result and provide the token to the UWB applet 202. In operation S807-2, the UWB applet 202 may store the provided token. The stored token may be used while the second security authentication routine S413 which will be described below is being performed.

The second security authentication routine S413 will be described below with reference to FIG. 13. The second security authentication routine S413 may be performed after the first terminal 10 and the second terminal 20 physically approach each other so that the first communication channel is established. When the first security authentication routine S401 is performed in advance before the first terminal 10 and the second terminal 20 physically approach each other, the authentication procedure of the first terminal 10 and the second terminal 20 can be performed even without the intervention of the user of the second terminal 20 during the second security authentication routine S413.

FIG. 13 may be understood as a drawing that shows in more detail operations performed by the second terminal 20 in operation S413 during the authentication procedure of the first terminal 10 and the second terminal 20 which has been described with reference to FIGS. 6 and 7. Accordingly, detailed descriptions of the operations already described with reference to FIGS. 6 and 7 will not be repeated, but detailed operations of operation S413 will be described.

Referring to FIG. 13 together with FIG. 6, the first security authentication routine S401 may be performed in the second terminal 20 in operation S401, and the first communication channel may be established between the first terminal 10 and the second terminal 20 in operation S410. In operation S411, the application 201 of the second terminal 20 may receive the third message (including fields such as a second communication channel setup initiation request, a user authentication mode, etc.) from the first terminal 10, and the received third message may be provided to the UWB applet 202 of the second terminal 20.

In operation S1201, the UWB applet 202 may check the user security authentication result that is acquired and stored in advance as a result of performing the first security authentication routine S401. As described above, the user security authentication result may include a token value including whether the authentication has succeeded or failed, identification information on the authenticated user, information on the valid time or expiration date of the user authentication, the number of times the user authentication is valid, and the like.

When the result of performing the first security authentication routine S401 indicates that the user security authentication has succeeded and indicates that the user authentication has not expired (i.e., the user authentication is currently valid), the UWB applet 202 may proceed with operation S1203 and subsequent operations.

When the result of performing the first security authentication routine S401 indicates that the user security authentication has failed or indicates that the user authentication is currently expired, the UWB applet 202 may perform operation S1201 again after re-performing the first security authentication routine S401.

In operation S1203, the UWB applet 202 may request security authentication from the security authentication applet 212 together with the public key 41 of the first terminal acquired from the first terminal 10 during the registration process. The token acquired from the security authentication applet 212 during the first security authentication routine S401 may be included in the security authentication request.

In operation S1203, the security authentication applet 212 may verify the token. There may be various methods of the security authentication applet 212 verifying the token the security authentication applet 212 has issued during the first security authentication routine S401 in this operation.

The security authentication applet 212 may generate and retain its own key pair. The key pair of the security authentication applet 212 may be understood as replacing the second key pair (the second public key 53 and the second private key 54) of the second terminal 20 which has been described in relation to the operation S411-2 of FIG. 6. That is, the key pair of the security authentication applet 212 may be used to generate the second secret key 62 using the elliptic-curve Diffie-Hellman algorithm and the like along with the key pair (41 and 42) of the first terminal. The second secret key 62 may be derived when the public key 41 of the first terminal and the private key of the security authentication applet 212 are input into the key exchange function, and the same second secret key 62 may be derived when the private key 42 of the first terminal and the public key of the security authentication applet 212 are input into the key exchange function. That is, the security authentication applet 212 of the second terminal may derive the second secret key 62 using the public key 41 of the first terminal together with its own private key when the public key 41 of the first terminal is provided to the second terminal, and the first terminal 10 may derive the same second secret key 62 using the public key of the security authentication applet 212 of the second terminal together with its own private key 42 when the public key of the security authentication applet 212 of the second terminal is provided to the first terminal. The second secret key 62 may be used to determine a sub-session key for encrypting and protecting a sub-session of the communication session formed between the first terminal 10 and the second terminal 20.

When the security authentication applet 212 succeeds in verifying the token, the public key of the security authentication applet 212 along with the token verification result may be provided to the UWB applet 202 by the security authentication applet 212 in operation S1205.

The UWB applet 202 may store the public key of the security authentication applet 212 to be provided to the first terminal 10.

After operation S1205 is performed, the second terminal 20 may perform operations S415 to S417 that have been described above with reference to FIG. 7. Operations after the second communication channel is established between the first terminal 10 and the second terminal 20 will be described below.

In operation S420, the second communication channel may be established between the first terminal 10 and the second terminal 20, and data protected with the first secret key may be received by the UWB applet 202 from the first terminal 10.

In operation S421-2, the UWB applet 202 may transmit the second public key of the second terminal 20 to the first terminal 10 through the second communication channel. Here, the second public key of the second terminal 20 may be the public key of the security authentication applet 212 received from the security authentication applet 212 in operation S1205.

In operation S423, the UWB applet 202 may receive data protected with the second secret key from the first terminal 10 through the second communication channel.

In operation S423-1, the UWB applet 202 may provide the data received in operation S423 to the security authentication applet 212 along with the public key 41 of the first terminal.

In operation S425-2, the security authentication applet 212 may acquire the second secret key. The second secret key 62 may be a key used as the session key of the sub-session of the second communication channel between the first terminal 10 and the second terminal 20. The second secret key 62 may be acquired by inputting the public key 41 of the first terminal and the private key of the security authentication applet 212 into the key exchange function.

In operation S427-2, the security authentication applet 212 may decrypt the data received from the first terminal 10 in operation S423 using the second secret key.

In operation S429-1, the security authentication applet 212 may provide the decrypted data to the UWB applet 202. In operation S429-2, the UWB applet 202 may provide the decrypted data to the application 201. The application 201 may read the decrypted data.

Through this embodiment that has been described with reference to FIGS. 11 to 13, it is possible to further enhance security by requiring additional security authentication (fingerprint, face, iris, password, etc.) from the user of the second terminal 20 in the registration and authentication process for the second communication channel between the first terminal 10 and the second terminal 20, for example, the short-range communication based on UWB communication technology. Thus, it is possible to safely process registration, authentication, and data exchange between the first terminal 10 and the second terminal 20.

Also, in this embodiment, at least some operations of additional security authentication required from the user of the second terminal 20 may be processed in the security area (e.g., Secure Element) of the second terminal 20, and thus it is possible to enhance security. Specifically, in this embodiment, the UWB applet 202 and the security authentication applet 212 may be executed in the security area, and the two applets 202 and 212 may safely exchange data through a sharable interface object in the security area. Thus, it is possible to safely protect data from external hacking.

Also, in this embodiment, by generating the second secret key for encrypting the sub-session using the key pair of the security authentication applet 212 executed in the security area, it is possible to safely protect data transmitted or received between the applications of the first terminal 10 and the second terminal 20.

The communication method between terminals and the terminal devices in which the method is implemented according to some embodiments of the present disclosure have been described with reference to FIGS. 1 to 13.

The technical spirit of the present disclosure that has been described with reference to FIGS. 1 to 13 may be implemented as computer-readable code on a computer-readable medium. The computer-readable recording medium may be, for example, a removable recording medium (a compact disc (CD), a digital versatile disc (DVD), a Blu-ray disc, a USB storage device, or a portable hard disk) or a fixed recording medium (a read-only memory (ROM), a random access memory (RAM), or a hard disk in computer). The computer program recorded on the computer-readable recording medium may be transmitted to another computing apparatus via a network such as the Internet and installed in the computing apparatus, and thus can be used in the computing apparatus.

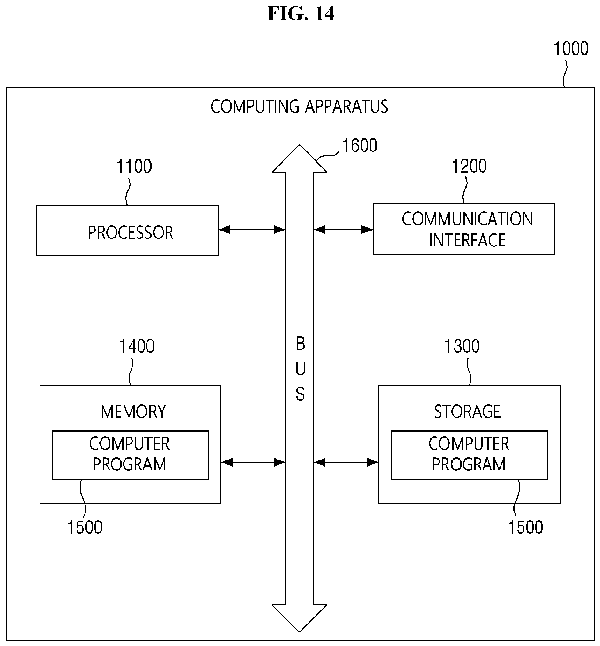

A hardware configuration of an exemplary computing apparatus according to some embodiments of the present disclosure will be described with reference to FIG. 14. The computing apparatus described with reference to FIG. 14 may be, for example, the hardware configuration of the first terminal 10 or the second terminal 20 that has been described with reference to FIG. 2.

FIG. 14 is an exemplary hardware configuration diagram in which the computing apparatus can be implemented according to various embodiments of the present disclosure. A computing apparatus 1000 may include one or more processors 1100, a system bus 1600, a communication interface 1200, and a memory 1400 for loading a computer program 1500 executed by the processor 1100, and a storage 1300 for storing the computer program 1500.

The processor 1100 may control the overall operation of each component of the computing apparatus 1000. The processor 1100 may be configured to include at least one of a central processing unit (CPU), a micro-processor unit (MPU), a micro-controller unit (MCU), a graphic processing unit (GPU), or any type of processor well known in the art. Also, the processor 1100 may perform computation for at least one application or program for executing the methods or operations according to various embodiments of the present disclosure. The computing apparatus 1000 may include two or more processors.

The memory 1400 stores various kinds of data, instructions, and/or information. The memory 1400 may load one or more computer programs 1500 from the storage 1300 in order to execute the methods or operations according to various embodiments of the present disclosure. The memory 1400 may be, for example, a RAM, but the present disclosure is not limited thereto.

The system bus 1600 provides a communication function between the components of the computing apparatus 1000. The system bus 1600 may be implemented as various types of buses, such as an address bus, a data bus, and a control bus.

The communication interface 1200 supports wired or wireless Internet communication of the computing apparatus 1000. The communication interface 1200 may support various communication schemes in addition to Internet communication. To this end, the communication interface 1200 may be configured to include a communication module well known in the art. The storage 1300 may non-temporarily store one or more computer programs 1500. The storage 1300 may be configured to include a non-volatile memory such as a flash memory, a hard disk, a removable disk, or any type of computer-readable recording medium well known in the art.

The computer program 1500 may include one or more instructions in which methods or operations according to various embodiments of the present disclosure are implemented. When the computer program 1500 is loaded into the memory 1400, the processor 1100 may perform the methods or operations according to various embodiments of the present disclosure by executing the instructions.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although the operations are shown in a specific order in the drawings, those skilled in the art will appreciate that many variations and modifications can be made to the preferred embodiments without substantially departing from the principles of the present disclosure. Therefore, the preferred embodiments of the disclosure are used in a generic and descriptive sense only and not for purposes of limitation. The scope of protection of the present disclosure should be interpreted by the following claims, and all technical ideas within the scope equivalent thereto should be construed as being included in the scope of the technical idea defined by the present disclosure.

## Claims

1. A communication method comprising:
establishing, by a second terminal, a connection with a first terminal through a first communication channel that uses a first protocol;
receiving, by the second terminal, a first message including a public key of the first terminal from the first terminal through the first communication channel;
storing, by the second terminal, the public key of the first terminal;
transmitting, by the second terminal, a second message including a public key of the second terminal to the first terminal through the first communication channel; and
generating a first secret key,
wherein the first secret key is configured to be generated by the second terminal when the public key of the first terminal and a private key of the second terminal are input into a key exchange function;
the first secret key is configured to be generated by the first terminal when a private key of the first terminal and the public key of the second terminal are input into the key exchange function; and
the first secret key is configured to be used for communication using a second protocol between the first terminal and the second terminal.

2. The communication method of claim 1, wherein the storing comprises:
providing, by a second application, the public key of the first terminal to a second applet executed in the second terminal; and
storing, by the second applet, the public key of the first terminal; and
the second applet is executed in the second terminal to support the communication using the second protocol different from the first protocol.

3. The communication method of claim 1, wherein the transmitting comprises:
providing, by a second applet, the public key of the second terminal to the second application; and
transmitting, by the second application, the provided public key of the second terminal to the first terminal; and
the second applet is executed in the second terminal to support the communication using the second protocol different from the first protocol.

4. The communication method of claim 1, wherein the generating comprises generating and storing, by the second terminal, the first secret key by inputting the public key of the first terminal and the private key of the second terminal into the key exchange function before receiving a message regarding a configuration of the communication using the second protocol.

5. The communication method of claim 1, wherein at least one of the first message and the second message includes a field indicating a user authentication mode required through the second terminal.

6. The communication method of claim 5, wherein the user authentication mode includes a security mode and a non-security mode; and
the security mode is a mode that requires execution of a security authentication routine through the second terminal during authentication between the first terminal and the second terminal.

7. The communication method of claim 1, further comprising:
receiving, by the second terminal through the first communication channel, a third message regarding a configuration of a second communication channel that uses the second protocol from the first terminal;
initiating, by the second terminal, ranging to establish the second communication channel;
establishing, by the second terminal, a connection with the first terminal through the second communication channel; and
receiving data protected using the first secret key through the second communication channel.

8. The communication method of claim 7, wherein the receiving of the data protected using the first secret key comprises:
transmitting, by the second terminal, a second public key of the second terminal to the first terminal;
acquiring, by the second terminal, a second secret key using a second private key of the second terminal and the public key of the first terminal; and
reading, by the second terminal, data received from the first terminal using the acquired second secret key.

9. The communication method of claim 8, wherein the transmitting comprises acquiring, by a second applet executed in the second terminal, the second public key from a second application executed in the second terminal;
the acquiring of the second secret key comprises:
acquiring, by the second application, the public key of the first terminal from the second applet; and
acquiring, by the second application, the second secret key by using the second private key retained by the second application and the public key of the first terminal acquired from the second applet; and
the second applet is executed in the second terminal to support communication over the second protocol different from the first protocol.

10. The communication method of claim 7, wherein the third message includes a field indicating a user authentication mode required through the second terminal, and
the communication method further comprises, before the initiating, performing a security authentication routine through the second terminal on the basis of a determination that the user authentication mode is a security mode.

11. A communication method comprising:
establishing, by a first terminal, a connection with a second terminal through a first communication channel that uses a first protocol;
transmitting, by the first terminal, a first message including a public key of the first terminal to the second terminal through the first communication channel;
receiving, by the first terminal, a second message including a public key of the second terminal from the second terminal through the first communication channel;
storing, by the first terminal, the public key of the second terminal; and
generating a first secret key,
wherein the first secret key is configured to be generated by the first terminal when the public key of the second terminal and a private key of the first terminal are input into a key exchange function;
the first secret key is configured to be generated by the second terminal when a private key of the second terminal and the public key of the first terminal are input into the key exchange function; and
the first secret key is configured to be used for communication using a second protocol between the first terminal and the second terminal.

12. The communication method of claim 11, wherein the transmitting comprises:
requesting, by a first application executed in the first terminal, key information from a first applet executed in the first terminal;
providing, by the first applet, the public key of the first terminal to the first application; and
transmitting, by the first application, the first message to the second terminal;
and
the first applet is executed in the first terminal to support the communication using the second protocol different from the first protocol.

13. The communication method of claim 11, wherein the storing comprises:
providing, by the first application, the public key of the second terminal to the first applet; and
storing, by the first applet, the public key of the second terminal; and
the first applet is executed in the first terminal to support the communication over the second protocol different from the first protocol.

14. The communication method of claim 11, wherein the generating comprises generating and storing, by the first terminal, the first secret key by inputting the public key of the second terminal and the private key of the first terminal into the key exchange function before receiving a message regarding a configuration of the communication using the second protocol.

15. The communication method of claim 11, further comprising:
transmitting, by the first terminal through the first communication channel, a third message regarding a configuration of a second communication channel that uses the second protocol to the second terminal;
initiating, by the first terminal, ranging to establish the second communication channel;
establishing, by the first terminal, a connection with the second terminal through the second communication channel; and
transmitting data protected using the first secret key through the second communication channel.

16. The communication method of claim 15, wherein the transmitting of the data protected using the first secret key through the second communication channel comprises:
receiving, by the first terminal, a second public key of the second terminal from the second terminal;
acquiring, by the first terminal, a second secret key by using the private key of the first terminal and the second public key of the second terminal; and
transmitting, by the first terminal, data protected using the second secret key to the second terminal through the second communication channel.
